# EUROPÄISCHE PATENTANMELDUNG

(11) **EP 2 039 610 A1**
(43) Veröffentlichungstag der Anmeldung: **25.03.2009**
(21) Anmeldenummer: 07018344.7
(22) Anmeldetag: 19.09.2007
(51) Int. Cl.: B65B 59/00, B65G 7/06

(54) **Verfahren und Vorrichtung zum Verschieben von einem Maschinenteil**

(71) Anmelder: UHLMANN PAC-SYSTEME GmbH & Co. KG, 88471 Laupheim (DE)
(72) Erfinder: Seiffert, Martin, 89601 Schelklingen (DE)
(74) Vertreter: Wächter, Jochen

(57) **Zusammenfassung**

Die Erfindung betrifft ein Verfahren zum Verschieben von einem Maschinenteil, insbesondere einer Zuführung einer Thermoformmaschirie, auf einem Maschinentisch 1, bei dem eine durch eine Bodenplatte 5 verschlossene Kammer 4 in der Grundplatte 2 des Maschinenteils durch eine Druckleitung 3 mit einem Fluid beaufschlagt und dadurch die Grundplatte 2 gegenüber der Bodenplatte 5 verstellt und von dem Maschinentisch 1 abgehoben wird, und bei dem anschließend das auf der Bodenplatte 5 gegenüber dem Maschinentisch 1 abgestützte Maschinenteil auf der Bodenplatte 5 in der gewünschten Richtung verschoben wird. Außerdem wird eine Vorrichtung zur Durchführung des Verfahrens offenbart.

## Beschreibung

Gegenstand der Erfindung ist ein Verfahren zum Verschieben von einem Maschinenteil, insbesondere einer Zuführung einer Thermoformmaschine, auf einem Maschinentisch, bei dem eine durch eine Bodenplatte verschlossene Kammer in der Grundplatte des Maschinenteils durch eine Druckleitung mit einem Fluid beaufschlagt und dadurch die Grundplatte gegenüber der Bodenplatte verstellt und von dem Maschinentisch abgehoben wird, und bei dem anschließend das auf der Bodenplatte gegenüber dem Maschinentisch abgestützte Maschinenteil auf der Bodenplatte in der gewünschten Richtung verschoben wird. Die Erfindung betrifft weiterhin eine Vorrichtung zur Durchführung dieses Verfahrens.

In der Praxis bei der Produktion ergibt sich häufig das Erfordernis, bei einer Maschine einzelne Maschinenteile neu auszurichten, wozu beispielhaft auf Thermoformmaschinen verwiesen wird, die unter anderem Zuführung aufweisen, mit denen Kleinteile, insbesondere pharmazeutische Produkte, in einer Formfolie ausgebildeten Näpfen zugeführt werden. Bei einem Produktwechsel ist es dabei häufig erforderlich, die Zuführung auszuwechseln, um eine Kontamination des neuen Produkten durch das zuvor abgefüllte zu vermeiden und im übrigen eine an die Gestalt der Produkte und deren Verteilung angepasste Zuführung bereitzustellen. Für den Wechsel der Zuführung ist es aus der DE 10 2005 035 902 B3 bekannt, die Bodenplatte der Zuführung mit Luftaustrittsöffnungen zu versehen, durch die Luft gepresst wird, um zwischen der Bodenplatte und der Tischplatte ein Luftpolster zu erzeugen, auf dem die Zuführung verschoben werden kann. Nachteilig dabei ist, dass die Erzeugung des Luftpolsters mit einem relativ hohen Lärmpegel verbunden ist.

Der Erfindung liegt daher die Aufgabe zugrunde, ein Verfahren anzugeben, durch das bei einem geringeren Lärmpegel das Verschieben eines Maschinenteils auf einem Maschinentisch möglich ist. Aufgabe der Erfindung ist es weiterhin, eine Vorrichtung zur Durchführung des Verfahrens bereitzustellen.

Der das Verfahren betreffende Teil der Aufgabe wird gelöst durch das eingangs genannte Verfahren, das die Vorteile bietet, dass kein Luftpolster zwischen der Bodenplatte und dem Maschinentisch aufgebaut werden muss, sondern dass durch die Nutzung des in die Kammer eingeleiteten Fluids die Grundplatte von dem Maschinentisch abgehoben wird. Es muss daher durch das Fluid nur mit einem ausreichenden Druck die Kammer beaufschlagt werden, wobei es besonderes vorteilhaft ist, wenn nach der Druckbeaufschlagung der Kammer die Druckleitung durch ein Ventil abgesperrt wird, da so ein permanentes Nachströmen des Fluids vermieden ist und der erreichte Arbeitsdruck in der Kammer bewahrt wird. Es wird damit das Fluid als Druckmittel eingespart, wodurch der Energieverbrauch sinkt und insbesondere das permanente Abströmen des Fluids unterbleibt, das zweckmäßigerweise durch Druckluft gebildet ist, so dass auch die Geräuschentwicklung durch ein Abströmen die Druckluft vollständig unterbunden ist.

Der die Vorrichtung betreffende Teil der Aufgabe wird dadurch gelöst, dass auf einem Maschinentisch ein Maschinenteil mit seiner Grundplatte angeordnet ist, in der eine über eine Druckleitung mit einer Druckquelle verbundene Kammer ausgebildet ist, die auf der dem Maschinentisch zugewandten Seite durch eine Bodenplatte verschlossen ist, und dass die Bodenplatte derart mit der Grundplatte verbunden ist, dass bei Druckbeaufschlagung der Kammer die Grundplatte höhenverstellbar ist.

Diese Vorrichtung zeichnet sich dadurch aus, dass durch die Druckbeaufschlagung der Kammer die Grundplatte relativ zu der Bodenplatte verstellt wird und dadurch die Grundplatte den Kontakt mit dem Maschinentisch verliert, also zum Verschieben des Maschinenteils nur noch die Bodenplatte über den Maschinentisch bewegt werden muss.

Dabei ist nach einer Ausführungsform der Erfindung vorgesehen, dass die Bodenplatte an ihren Rändern fest mit der Grundplatte verbunden ist, die relative Verstellung der Grundplatte gegenüber der Bodenplatte also durch eine Deformation der Bodenplatte erzielt wird, die sich unter der Wirkung des Druckes elastisch verformt. Dazu bietet es sich an, dass die Bodenplatte aus einem Kunststoff gefertigt ist, da dieser Kunststoff mit den erforderlichen Eigenschaften bereitgestellt werden kann, insbesondere die Dicke der Bodenplatte so bemessen ist, dass diese zum einen unter der Wirkung des Druckes in der Kammer im Mittenbereich auslenkbar und zum anderen geeignet ist, das Gewicht des Maschinenteils zu tragen, das sich über das Fluid auf der Bodenplatte abstützt, die wiederum die Gewichtskraft auf den Maschinentisch einleitet.

Um zu verhindern, dass die Ränder der Bodenplatte sich gegenüber der Grundplatte verstellen, ist die Gestaltung vorzugsweise so getroffen, dass in der Grundplatte eine Plattentasche ausgebildet ist, in der die Bodenplatte randseitig aufgenommen ist, und dass die Bodenplatte durch gleichmäßig über den Umfang verteilt angeordnete Befestigungsankern in der Plattentasche mit der Grundplatte verbunden ist.

Nach einer alternativen Ausführungsform besteht allerdings auch die Möglichkeit, dass die Bodenplatte höhenverstellbar in der Kammer der Grundplatte gelagert ist, also bei druckbeaufschlagter Kammer durch das Fluid eine Deformation der Bodenplatte verzichtbar ist, weil die Grundplatte gegenüber der Bodenplatte angehoben wird und dadurch den Kontakt mit dem Maschinentisch verliert.

Im folgenden wird die Erfindung an einem in der Zeichnung dargestellten Ausführungsbeispiel näher erläutert; es zeigen:
- Fig. 1: eine schematische Darstellung eines Querschnitts eines auf einem Maschinentisch angeordneten Maschinenteils in der Arbeitsstellung, und
- Fig. 2: eine der Figur 1 entsprechende Darstellung in der Verschiebestellung.

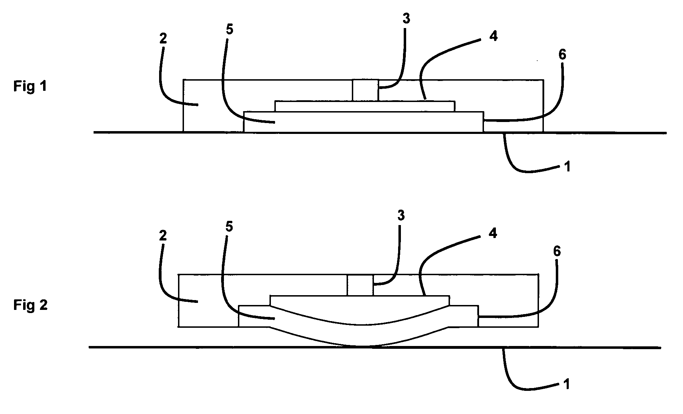

In den Figuren 1 und 2 ist ein Maschinentisch 1 dargestellt, wie dieser insbesondere bei Thermoformmaschinen Verwendung findet, um darauf Maschinenteile wie z.B. Zuführungen anzuordnen. Von dem Maschinenteil ist zur Vereinfachung der Darstellung lediglich die Grundplatte 2 gezeigt, auf der die übrigen Baugruppen des Maschinenteils angeordnet werden können. In der Grundplatte 2 ist eine über eine Druckleitung 3 mit einer Druckquelle verbundene Kammer 4 ausgebildet, die auf der dem Maschinentisch 1 zugewandten Seite durch eine Bodenplatte 5 verschlossen ist. Dabei ist die Bodenplatte 5 derart mit der Grundplatte 2 verbunden, dass bei Beaufschlagung der Kammer 4 die Grundplatte 2 höhenverstellbar ist. Bei dem in der Zeichnung dargestellten Ausführungsbeispiel ist die Bodenplatte 5 an ihren Rändern fest mit der Grundplatte 2 verbunden, wobei in der Grundplatte 2 eine Plattentasche 6 ausgebildet ist, in der die Bodenplatte 5 randseitig aufgenommen ist und die Bodenplatte 5 durch gleichmäßig über ihren Umfang verteilt angeordnete Befestigungsanker in der Plattentasche 6 mit der Grundplatte 2 verbunden ist. Die Dicke der Bodenplatte 5 ist dabei so bemessen, dass diese zum einen unter der Wirkung des Druckes in der Kammer 4 im Mittenbereich auslenkbar und zum anderen geeignet ist, das Gewicht des Maschinenteils zu tragen (Figur 2), wobei zur Herstellung der Bodenplatte 5 prinzipiell jeder Werkstoff geeignet ist, der die entsprechenden Vorgaben entfällt, was aber in kostengünstiger Weise besonders einfach durch einen Kunststoff realisierbar ist.

Nach einer alternativen, in der Zeichnung nicht näher dargestellten Ausführungsform besteht gleichfalls die Möglichkeit, dass die Bodenplatte 5 höhenverstellbar in der Kammer 4 der Grundplatte 2 gelagert ist, wobei bei dieser Ausführungsform eine Deformation der Bodenplatte 5 verzichtbar ist, dafür erhöhte Ansprüche an die Lagerung der Grundplatte 2 gegenüber der Bodenplatte 5 bestehen.

Bei derartigen Vorrichtungen besteht die Möglichkeit, zum Verschieben des Maschinenteils auf einen Maschinentisch 1 von der Druckquelle über die Druckleitung 3 das Druckmittel in die Kammer 4 einzuleiten, bis der erforderliche Arbeitsdruck erreicht ist, um die Grundplatte 2 gegenüber der Bodenplatte 5 zu verstellen und somit von dem Maschinentisch 1 abzuheben. Ist dieser Arbeitsdruck erreicht, kann die Druckleitung 3 durch ein Ventil abgesperrt werden, so dass ohne Zuführung weiteren Druckmittels der erforderliche Arbeitsdruck in der Kammer 4 bereitgestellt ist. In dieser Konstellation kann das Maschinenteil in einfacher Weise relativ zu dem Maschinentisch 1 verschoben werden, wobei nach der korrekten Positionierung lediglich das Ventil wieder geöffnet werden muss, um den Arbeitsdruck in der Kammer 4 abzubauen und die Grundplatte 2 wieder auf den Maschinentisch 1 abzusenken.

Durch dieses erfindungsgemäße Verfahren und die geeignet ausgebildete Vorrichtung besteht insbesondere auch die Möglichkeit, das Maschinenteil über Taschen und Absätze des Maschinentisches 1 zu verschieben, da anders als bei der Erzeugung eines Luftpolsters die erforderliche Druckluft nicht durch diese Taschen und Absätze abströmen kann.

## Patentansprüche

1. Verfahren zum Verschieben von einem Maschinenteil, insbesondere einer Zuführung einer Thermoformmaschine, auf einem Maschinentisch 1, bei dem eine durch eine Bodenplatte 5 verschlossene Kammer 4 in der Grundplatte 2 des Maschinenteils durch eine Druckleitung 3 mit einem Fluid beaufschlagt und **dadurch** die Grundplatte 2 gegenüber der Bodenplatte 5 verstellt und von dem Maschinentisch 1 abgehoben wird, und bei dem anschließend das auf der Bodenplatte 5 gegenüber dem Maschinentisch 1 abgestützte Maschinenteil auf der Bodenplatte 5 in der gewünschten Richtung verschoben wird.

2. Verfahren nach Anspruch 1, **dadurch gekennzeichnet, dass** nach der Druckbeaufschlagung der Kammer 4 die Druckleitung 3 durch ein Ventil abgesperrt wird.

3. Vorrichtung zur Durchführung des Verfahrens nach Anspruch 1, **dadurch gekennzeichnet, dass** auf einem Maschinentisch 1 ein Maschinenteil mit seiner Grundplatte 2 angeordnet ist, in der eine über eine Druckleitung 3 mit einer Druckquelle verbundene Kammer 4 ausgebildet ist, die auf der dem Maschinentisch 1 zugewandten Seite durch eine Bodenplatte 5 verschlossen ist, und dass die Bodenplatte 5 derart mit der Grundplatte 2 verbunden ist, dass bei Druckbeaufschlagung der Kammer 3 die Grundplatte 2 höhenverstellbar ist.

4. Vorrichtung nach Anspruch 3, **dadurch gekennzeichnet, dass** die Bodenplatte 5 an ihren Rändern fest mit der Grundplatte 2 verbunden ist.

5. Vorrichtung nach Anspruch 4, **dadurch gekennzeichnet, dass** die Bodenplatte 5 aus einem Kunststoff gefertigt ist.

6. Vorrichtung nach Anspruch 4 oder 5, **dadurch gekennzeichnet, dass** die Dicke der Bodenplatte 5 so bemessen ist, dass diese zum einen unter der Wirkung des Druckes in der Kammer 4 im Mittenbereich auslenkbar und zum anderen geeignet ist, das Gewicht des Maschinenteils zu tragen.

7. Vorrichtung nach einem der Ansprüche 4 bis 6, **dadurch gekennzeichnet, dass** in der Grundplatte 2 eine Plattentasche 6 ausgebildet ist, in der die Bodenplatte 5 randseitig aufgenommen ist, und dass die Bodenplatte 5 durch gleichmäßig über ihren Umfang verteilt angeordneten Befestigungsankern in der Plattentasche 6 mit der Grundplatte 2 verbunden ist.

8. Vorrichtung nach einem der Anspruch 3, **dadurch gekennzeichnet, dass** die Bodenplatte 5 höhenverstellbar in der Kammer 3 der Grundplatte 2 gelagert ist.
